# EUROPEAN PATENT APPLICATION

(11) **EP 1 862 484 A1**
(43) Date of publication of application: **05.12.2007**
(21) Application number: 06729943.8
(22) Date of filing: 24.03.2006
(51) Int. Cl.: C08F 210/00, C08F 212/02, C08F 232/08

(54) **NORBORNENE ADDITION COPOLYMER AND MOLDINGS**

(30) Priority: 25.03.2005 JP 2005088044
(71) Applicant: ZEON CORPORATION, Tokyo 100-8246 (JP)
(72) Inventor: IKEDA, Shintaro, Tokyo, 1008246 (JP); NISHII, Kei, Tokyo, 1008246 (JP); TSUNOGAE, Yasuo, Tokyo, 1008246 (JP)
(74) Representative: Albrecht, Thomas
(86) International application number: PCT/JP2006/305995
(87) International publication number: WO 2006/104049

(57) **Abstract**

A norbomene addition copolymer obtained by subjecting a norbornene monomer (A), an aromatic vinyl compound (B), and an α-olefin having 2 to 20 cabon atoms (C) to addition copolymerization, the sum of the content of repeating units derived from the norbomene monomer (A) and the content of repeating units derived from the aromatic vinyl compound (B) being 25 to 90 mol% based on the total repeating units, and the content of repeating units derived from the aromatic vinyl compound (B) being 0.55 to 10 (mol) times the content of repeating units derived from the norbornene monomer (A); and a molded article obtained by molding the norbornene addition copolymer. According to the present invention, a norbomene addition copolymer exhibiting excellent transparency, a high refractive index, and a small intrinsic birefringence value, and a molded article obtained by molding the norbomene addition copolymer are provided.

## Description

### TECHNICAL FIELD

The present invention relates to a norbomene addition copolymer and its applications. More particularly, the present invention relates to a norbomene addition copolymer which exhibits excellent transparency, a high refractive index, and a small intrinsic birefringence value, and a molded article obtained by molding the norbomene addition copolymer.

### BACKGROUND ART

A copolymer obtained by subjecting a norbomene monomer and an α-olefin to addition copolymerization (hereinafter may be referred to as "norbomene monomer/α-olefin copolymer") exhibits excellent heat resistance, excellent transparency, low water absorption, and low birefringent properties, and is suitable for optical applications.
Along with a recent enhancement in functions of optical instruments, development of a norbomene monomer/α-olefin addition copolymer exhibiting a higher refractive index and lower birefringent properties has been demanded.

As the method of increasing the refractive index of the norbornene, monomer/α-olefin copolymer, a method has been known which uses a norbomene monomer having an aromatic ring as a substituent.

For example, JP-7-51609B and JP-11-504669T disclose that a copolymer suitable as an optical material is obtained by subjecting 5-phenylnorbornene or 1,4-methano-1,4,4a,9a-tetrahydrofluorene and ethylene to addition copolymerization. However, the resulting copolymer has a high refractive index, but does not have a sufficiently small birefringence value.

JP-10-287713A discloses that a ternary copolymer obtained from (I) an α-olefin, (II) a cyclic olefin, and (III) an aromatic vinyl compound, wherein the content of the component (I) is 30 to 89 mol%, the content of the component (II) is 10 to 70 mol%, and the content of the component (III) is 0.1 to 35 mol%, with 0.05×(II) ≧ (III) ≧ 0.01×(II) being satisfied, exhibits low birefringent properties and is suitable as a material for molding an optical molded article. However, the resulting ternary copolymer has an insufficient refractive index and does not have a sufficiently small birefringence value.
Therefore, the copolymers disclosed in the above documents are not satisfactory optical materials.

The present invention has been achieved in view of the above situation of the related art. An object of the present invention is to provide a norbomene addition copolymer which exhibits excellent transparency, a high refractive index, and a small intrinsic birefringence value, and a molded article obtained by molding the norbomene addition copolymer.

### DISCLOSURE OF THE INVENTION

The inventors of the present invention have conducted extensive studies in order to achieve the above object. As a result, the inventors have found that a ternary addition copolymer obtained by subjecting a norbornene monomer, an aromatic vinyl compound, and an α-olefin to addition copolymerization exhibits excellent transparency, a high refractive index, and a small intrinsic birefringence value by setting the content of repeating units derived from the norbomene monomer, the content of repeating units derived from the aromatic vinyl compound, and the weight average molecular weight at specific values. This finding has led to the completion of the present invention.

According to a first aspect of the present invention, there is provided a norbornene addition copolymer obtained by subjecting a norbomene monomer (A), an aromatic vinyl compound (B), and an α-olefin having 2 to 20 cabon atoms (C) to addition copolymerization, the sum of the content of repeating units derived from the norbornene monomer (A) and the content of repeating units derived from the aromatic vinyl compound (B) being 25 to 90 mol% based on the total repeating units, and the content of repeating units derived from the aromatic vinyl compound (B) being 0.55 to 10 (mol) times the content of repeating units derived from the norbomene monomer (A).

In the norbornene addition copolymer of the present invention, the norbomene monomer (A) preferably has an aromatic ring as a substituent.
The norbomene addition copolymer of the present invention preferably has a negative stress-optical coefficient (C_{R}).

According to a second aspect of the present invention, there is provided a molded article obtained by molding the norbornene addition copolymer of the present invention.
The molded article of the present invention is preferably used for optics.

### BEST MODE FOR CARRYING OUT THE INVENTION

### 1) Norbornene addition copolymer

A norbomene addition copolymer of the present invention is obtained by subjecting a norbomene monomer (A), an aromatic vinyl compound (B), and an α-olefin having 2 to 20 cabon atoms (C) to addition copolymerization, wherein the sum of the content of repeating units derived from the norbomene monomer (A) and the content of repeating units derived from the aromatic vinyl compound (B) is 25 to 90 mol% based on the total repeating units, and the content of repeating units derived from the aromatic vinyl compound (B) is 0.55 to 10 (mol) times the content of repeating units derived from the norbornene monomer (A).

In the present invention, the term "repeating unit derived from the norbornene monomer" refers to a repeating unit obtained by subjecting the norbornene monomer to addition copolymerization, and the term "repeating unit derived from the aromatic vinyl compound" refers to a repeating unit obtained by subjecting the aromatic vinyl compound to addition copolymerization.

### (A) Norbornene monomer

The norbornene monomer (A) used in the present invention is not particularly limited insofar as the norbomene monomer (A) is a compound having a norbornene ring structure. Compounds of the following formula (1) can be given as preferred examples of the norbornene monomer (A).

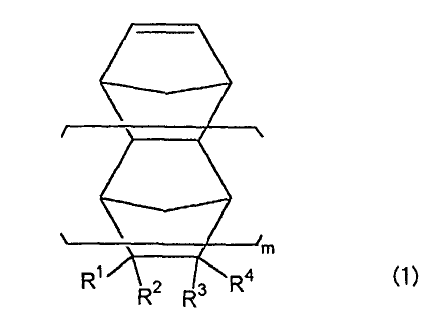

wherein m represents an integer from 0 to 2, and R¹ to R⁴ individually represent a hydrogen atom, a halogen atom, or a hydrocarbon group.

The halogen atom is a fluorine atom, a chlorine atom, a bromine atom, or an iodine atom.
Examples of the hydrocarbon group include an alkyl group, an alkenyl group, a cycloalkyl group, a cycloalkenyl group, an aromatic hydrocarbon group, and the like. The number of carbon atoms of the hydrocarbon group is preferably 1 to 20, although the number of carbon atoms is not particularly limited.

Examples of the alkyl group include a methyl group, ethyl group, propyl group, isopropyl group, amyl group, hexyl group, octyl group, decyl group, dodecyl group, octadecyl group, and the like.
Examples of the alkenyl group include a vinyl group, 1-propenyl group, 2-propenyl group, 1-butenyl group, 2-pentenyl group, and the like.

Examples of the cycloalkyl group include a cyclopentyl group, cyclohexyl group, and the like.
Examples of the cycloalkenyl group include a cyclopentenyl group, cyclohexenyl group, and the like.
Examples of the aromatic hydrocarbon group include a phenyl group, 1-naphthyl group, 2-naphthyl group, and the like.

R¹ to R⁴ may bond to form a monocyclic ring or a polycyclic ring. The monocyclic ring or the polycyclic ring thus formed may have a double bond.

R¹ and R² or R³ and R⁴ may form an alkylidene group in combination. The number of carbon atoms of the alkylidene group is usually 2 to 20, although the number of carbon atoms is not particularly limited.
Specific examples of the alkylidene group include an ethylidene group, propylidene group, isopropylidene group, and the like.

The hydrocarbon group may have a substituent at an arbitrary position. Examples of the substituent include halogen atoms such as a fluorine atom and chlorine atom; alkoxy groups such as a methoxy group and ethoxy group; alkoxycarbonyl groups such as a methoxycarbonyl group and ethoxycarbonyl group; and the like.

Examples of the monomer of the formula (1) include norbornenes in which m in the formula (1) is 0, tetracyclododecenes in which m in the formula (1) is 1, and hexacycloheptadecenes in which m in the formula (1) is 2.

Specific examples of the norbornenes in which m is 0 include unsubstituted norbornene or norbornenes having an alkyl group such as norbornene, 5-methylnorbomene, and 5-ethylnorbornene; norbornenes having an alkenyl group such as 5-methylidenenorbomene, 5-ethylidenenorbomene, and 5-vinylnorbomene; norbornenes having a cycloalkyl group such as 5-cyclohexylnorbomene and 5-cyclopentylnorbomene; norbornenes having a cycloalkenyl group such as 5-cyclohexenylnorbomene and 5-cyclopentenylnorbornene; norbornenes having an aromatic ring such as 5-phenylnorbornene, 5-(o-methylphenyl)norbomene, 5-(m-methylphenyl)norbornene, 5-(p-methylphenyl)norbornene, 5-methyl-5-phenylnorbomene, 5-(p-chlorophenyl)norbomene, and 5-(α-naphthyl)norbornene;

monomers in which R¹ and R³ in the formula (1) bond to form a five-membered ring such as dicyclopentadiene and tricyclo[4.3.1^{2,5}.0]dec-3-ene; monomers in which R¹ to R⁴ in the formula (1) bond to form an aromatic ring such as tetracyclo[6.5.1^{2,5}.0^{1,6}.0^{8,13}]trideca-3,8,10,12-tetraene (also called 1,4-methano-1,4,4a,9a-tetrahydrofluorene), tetracyclo[9.2.1.0^{2,10}.0^{3,8}]tetradeca-3,5,7,12-tetraene (also called 1,4-methano-1,4,4a,5,10,10a-hexahydroanthracene), and cyclopentadiene-acenaphthylene adduct; and the like.

Specific examples of the tetracyclododecenes in which m is 1 include unsubstituted tetracyclododecene or tetracyclododecenes having an alkyl group such as tetracyclododecene and 8-methyltetracyclododecene; tetracyclododecenes having an alkenyl group such as 8-methylidenetetracyclododecene, 8-ethylidenetetracyclododecene, and 8-vinyltetracyclododecene; tetracyclododecenes having a cycloalkyl group such as 8-cyclohexyltetracyclododecene; tetracyclododecenes having a cycloalkenyl group such as 8-cyclohexenyltetracyclododecene; and tetracyclododecenes having an aromatic ring such as 8-phenyltetracyclododecene.

As the hexacycloheptadecenes in which m is 2, a Diels-Alder addition product of the above tetracyclododecene and cyclopentadiene may be used.
These norbomene monomers may be used either individually or in combination of two or more.

In order to obtain a copolymer with a high refractive index, it is preferable to use a norbornene monomer having an aromatic ring as a substituent as the norbornene monomer (A). In particular, norbornenes having an aromatic ring; monomers in which R¹ to R⁴ in the formula (1) bond to form an aromatic ring; and tetracyclododecenes having an aromatic ring are preferred.

### (B) Aromatic vinyl compound

Examples of the aromatic vinyl compound used in the present invention include styrene; monoalkylstyrene or polyalkylstyrene which may be replaced with a halogen atom such as o-methylstyrene, m-methylstyrene, p-methylstyrene, o,p-dimethylstyrene, o-ethylstyrene, m-ethylstyrene, p-ethylstyrene, and p-chloromethylstyrene; functional group-containing styrene derivatives such as p-methoxystyrene, p-ethoxystyrene, p-vinylbenzoic acid, methyl p-vinylbenzoate, 4-vinylbenzyl acetate, p-hydroxystyrene, o-chlorostyrene, p-chlorostyrene, and divinylbenzene; vinylnaphthalene; α-substituted styrenes such as α-methylstyrene and 1,1-diphenylethane; and the like.

These aromatic vinyl compounds may be used either individually or in combination of two or more.
Of these, styrene, monoalkylstyrene or polyalkylstyrene which may be replaced with a halogen atom, functional group-containing styrene derivatives, and α-substituted styrenes are preferred, with styrene being particularly preferred.

### (C) α-Olefin having 2 to 20 carbon atoms

Examples of the α-olefin having 2 to 20 carbon atoms used in the present invention include linear α-olefins having 2 to 20 carbon atoms such as ehylene, propylene, 1-butene, 1-pentene, 1-hexene, 1-octene, 1-decene, 1-dodecene, 1-tetradecene, 1-hexadecene, 1-octadecene, and 1-eicosene; diolefins such as 1,4-pentadiene and 1,5-hexadiene; branched α-olefins having 4 to 20 carbon atoms such as 4-methyl-1-pentene, 3-methyl-1-pentene, 3-methyl-1-butene, and vinylcyclohexane; branched diolefins such as vinylcyclohexene; α-olefins having an aromatic ring such as 3-phenylpropylene and 4-phenylbutene; and the like.
These α-olefins may be used either individually or in combination of two or more.
Of these, linear α-olefins having 2 to 12 carbon atoms are preferred, and linear α-olefins having 2 to 8 carbon atoms are more preferred, with ethylene being particularly preferred.

In the present invention, the norbomene monomer (A), the aromatic vinyl compound (B), and the α-olefin having 2 to 20 carbon atoms (C) may be copolymerized with a monomer which can undergo addition copolymerization with these components. Examples of such a monomer include a cyclic monoolefin and a cyclic diolefin.

Specific examples of the cyclic monoolefin include cyclobutene, cyclopentene, cyclohexene, phenylcyclohexene, cycloheptene, cyclooctene, phenylcyclooctene, and the like. Specific examples of the cyclic diolefin include cyclohexadiene, methylcyclohexadiene, cyclooctadiene, phenylcyclooctadiene, and the like.

The norbomene addition copolymer of the present invention includes repeating units derived from the norbomene monomer (A), repeating units derived from the aromatic vinyl compound (B), and repeating units derived from the α-olefin having 2 to 20 carbon atoms (C) in the molecule.
The manner of copolymerization is not particularly limited. The manner of copolymerization may be random copolymerization or block copolymerization.

In the norbornene addition copolymer of the present invention, the sum of the content of repeating units derived from the norbornene monomer (A) and the content of repeating units derived from the aromatic vinyl compound (B) is 25 to 90 mol%, and preferably 30 to 80 mol% based on the total repeating units. When the sum of the content of repeating units derived from the norbornene monomer (A) and the content of repeating units derived from the aromatic vinyl compound (B) is within this range, the glass transition temperature (Tg) of the copolymer falls within 70 to 250°C, and preferably 80 to 230°C (i.e., suitable as an optical material).

The content of each repeating unit in the copolymer may be determined by ¹H-NMR spectrum analysis and ¹³C-NMR spectrum analysis.

In the norbomene addition copolymer of the present invention, the content of repeating units derived from the aromatic vinyl compound (B) is 0.55 to 10 (mol) times, preferably 0.6 to 8 (mol) times, and more preferably 0.65 to 6 (mol) times the content of repeating units derived from the norbomene monomer (A). The higher the content of repeating units derived from the aromatic vinyl compound (B), the higher the refractive index and the lower the stress-optical coefficient (C_{R}), whereby the intrinsic birefringence value of the copolymer decreases.

The content of repeating units having an aromatic ring in the total repeating units is preferably 20 to 90 mol%, and particularly preferably 25 to 80 mol% based on the total repeating units. When the content of repeating units having an aromatic ring is within this range, the copolymer has a high refractive index of 1.56 to 1.60.

The norbomene copolymer of the present invention is molded into a molded article by injection molding, melt-extrusion molding, or the like. The molded article exhibits birefringent properties due to orientation of the copolymer resin during molding. The birefringence value of the molded article is determined by the molding conditions and the molding material. Therefore, in order to reduce the birefringence value independent of the molding conditions, it is necessary to reduce the intrinsic birefringence value of the molding material.

The stress-optical coefficient (C_{R}) is one of factors which determine the intrinsic birefringence value. Since the intrinsic birefringence value and the stress-optical coefficient (C_{R}) have a proportional relationship, the intrinsic birefringence value decreases as the absolute value of the stress-optical coefficient (C_{R}) decreases. The stress-optical coefficient (C_{R}) corresponds to a slope in a graph in which the vertical axis indicates the applied stress and the horizontal axis indicates birefringent properties when a polymer is in a fluidized state. The stress-optical coefficient (C_{R}) is used as an index indicating the degree of birefringence of the polymer. The stress-optical coefficient (C_{R}) may be determined by a method described in "Journal of the Society of Rheology Japan", Vol. 19, No. 2, pp. 93-97 (1991), for example.

The birefringent properties can be reduced by causing the absolute value of the stress-optical coefficient (C_{R}) to approach zero. In order to reduce the absolute value of the stress-optical coefficient (C_{R}), the ratio ((B)/(A)) of the content (mol) of repeating units derived from the aromatic vinyl compound (B) to the content (mol) of repeating units derived from the norbomene monomer (A) is preferably 0.55 to 5, although the ratio (B)/(A) varies depending on the types of the norbomene monomer (A) and the aromatic vinyl compound (B) and the like. A molded article obtained from the copolymer of the present invention having a ratio (B)/(A) within this range exhibits extremely low birefringent properties.

The stress-optical constant (C_{R}) can be made negative by increasing the content of repeating units derived from the aromatic vinyl compound (B) (e.g. (B)/(A) = 0.66 to 10). The copolymer of the present invention with a negative stress-optical constant (C_{R}) (i.e., negative intrinsic birefringence value) is useful as a material for a retardation film of a liquid crystal display and the like.

In the norbornene copolymer of the present invention, when increasing the content of repeating units derived from the aromatic vinyl compound (B), the refractive index increases, the stress-optical constant (C_{R}) becomes negative, and the absolute value of the stress-optical constant (C_{R}) increases. If the ratio (B)/(A) exceeds 10, mechanical strength and heat resistance necessary for an optical molded article decrease.

According to the present invention, a norbornene addition copolymer having a refractive index of 1.55 to 1.60 and a stress-optical coefficient (C_{R}) of +1000×10⁻¹² to -4000×10⁻¹² Pa can be obtained by setting the ratio (B)/(A) at 0.55 to 10 (molar ratio).

The weight average molecular weight (Mw) of the norbomene addition copolymer of the present invention is usually 10,000 to 1,000,000, and preferably 20,000 to 500,000. If the molecular weight is too low, the resulting molded article exhibits insufficient strength. If the molecular weight is too high, it is difficult to mold the copolymer due to too high a melt viscosity.
The molecular weight may be adjusted by the polymerization temperature, the amount of polymerization catalyst, the monomer concentration, addition of a chain transfer agent, and the like.

### 2) Method of producing norbornene addition copolymer

The norbomene addition copolymer of the present invention may be produced by subjecting the norbomene monomer (A), the aromatic vinyl compound (B), and the α-olefin having 2 to 20 carbon atoms (C) to addition copolymerization in the presence of a metallocene catalyst, for example.

As the metallocene catalyst, a metallocene catalyst generally used as a single-site catalyst or a similar metallocene catalyst is used without specific limitations. In particular, a catalyst is preferably used which contains (a) a metallocene compound of a transition metal and (b) an organoaluminum oxy compound or (c) a borate or borane compound.

Crosslinked metallocene compounds of the following formula (2) can be given as specific examples of the metallocene compound (a).

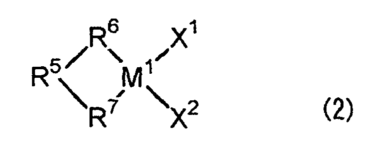

wherein M¹ represents a metal selected from the group consisting of titanium, zirconium, and hafnium. M¹ is preferably zirconium due to excellent catalytic activity.
X¹ and X² individually represent an alkyl group having 1 to 6 carbon atoms or a halogen atom.
R⁶ and R⁷ represent a cyclopentadienyl group, indenyl group, or fluorenyl group, which may be replaced with a hydrogen atom; an alkyl group such as a methyl group, ethyl group, isopropyl group, or tert-butyl group; phenyl group, benzyl group, or the like.
R⁵ represents a lower alkylene group such as a methylene group, ethylene group, or propylene group; an alkylidene group such as isopropylidene; a substituted alkylene group such as diphenylmethylene; a silylene group, or a substituted silylene group such as dimethylsilylene or diphenylsilylene.

Examples of the crosslinked metallocene compounds of the formula (2) include isopropylidene-(9-fluorenyl)(cyclopentadienyl)zirconium dichloride, diphenylmethylene-(9-fluorenyl)(cyclopentadienyl)zirconium dichloride, isopropylidene-(9-fluorenyl)[1-(3-methyl)cyclopentadienyl]zirconium dichloride, isopropylidene-(9-fluorenyl)[1-(3-tert-butyl)cyclopentadienyl]zirconium dichloride, isopropylidene-(1-indenyl)(cyclopentadienyl)zirconium dichloride, dimethylsilylene-bis(1-indenyl)zirconium dichloride, ethylene-bis(1-indenyl)zirconium dichloride, diphenylmethylene-bis(1-indenyl)zirconium dichloride, and isopropylidene-bis(1-indenyl)zirconium dichloride.

The crosslinked metallocene compounds of the formula (2) may be preferably used when the norbomene monomer (A) is a norbomene monomer having an aromatic ring.

In the present invention, half-metallocene compounds of the following formula (3) may be used as the metallocene compound (a).

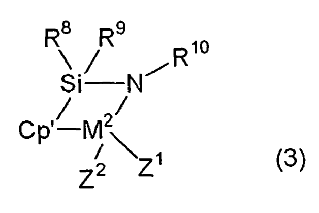

wherein M² represents titanium, zirconium, or hafnium, and Z¹ and Z² individually represent a hydrocarbon group having 1 to 12 carbon atoms or a halogen atom. Cp' represents an indenyl group or fluorenyl group, which may be replaced with a hydrocarbon group having 1 to 12 carbon atoms.
R⁸, R⁹, and R¹⁰ represent a hydrogen atom, an alkyl group having 20 or less carbon atoms, an aryl group having 20 or less carbon atoms, a silyl group having 20 or less carbon atoms, an alkyl halide group having 20 or less carbon atoms, or an aryl halide group having 20 or less carbon atoms.

Among the half-metallocene compounds of the formula (3), a half-titanocene in which M² is titanium is preferred. Specific examples of preferred half-titanocene compounds include (t-butylamide)dimethy-1-indenylsilanetitaniumdimethyl, (t-butylamide)dimethy-1-indenylsilanetitanium dichloride, (t-butylamide)dimethy-9-fluorenylsilanetitaniumdimethyl, (t-butylamide)dimethy-9-fluorenylsilanetitanium dichloride, (t-butylamide)dimethy-9-(3,6-dimethylfluorenyl)silanetitaniumdimethyl, (t-butylamide)dimethy-9-[3,6-di(i-propyl)fluorenyl]silanetitaniumdimethyl, (t-butylamide)dimethy-9-[3,6-di(t-butyl)fluorenyl]silanetitaniumdimethyl, (t-butylamide)dimethy-9-[2,7-di(t-butyl)fluorenyl]silanetitaniumdimethyl, (t-butylamide)dimethy-9-(2,3,6,7-tetramethylfluorenyl)silanetitaniumdimethyl, and the like. The half-titanocene compounds of the formula (3) are particularly preferably used when using a norbomene monomer without an aromatic ring as the norbornene monomer.

The organoaluminum oxy compound (b) or the borate or borane compound (c) used when forming the metallocene catalyst is an activator which activates the metallocene compound.

The organoaluminum oxy compound (b) may be a known aluminoxane or a benzene-insoluble organoaluminum oxy compound disclosed in JP-A-2-78687.

The borate or borane compound (c) is an activator which can react with the metallocene compound to convert the metallocene compound to cationic species, and is used in combination with an organoaluminum compound (d), if necessary. Specific examples of the borate or borane compound (c) are as follows. Specific examples of the borate compound include triethylammonium tetrakis(pentafluorophenyl)borate, trityltetrakis(pentafluorophenyl)borate, N,N-dimethylanilinium tetrakis(pentafluorophenyl)borate, ferrocenium tetra(pentafluorophenyl)borate, lithium tetrakis(pentafluorophenyl)borate, and the like. Specific examples of the borane compound include tris(4-fluorophenyl)boron, tris(3,5-difluorophenyl)boron, tris(4-fluoromethylphenyl)boron, tris(pentafluorophenyl)boron, and the like.

Examples of the organoaluminum compound (d) optionally used include trialkylaluminum such as trimethylaluminum, triethylaluminum, triisopropylaluminum, tri-n-butylaluminum, triisobutylaluminum, and tri-sec-butylaluminum; dialkylaluminum halides such as dimethylaluminum chloride and diisobutylaluminum chloride; dialkylaluminum hydrides such as diisobutylaluminum hydride; dialkylaluminium alkoxides such as dimethylaluminum methoxide; dialkylaluminum aryloxides such as diethylaluminum phenoxide; and the like.

As the copolymerization method for the norbomene monomer (A), the aromatic vinyl compound (B), and the α-olefin (C), solution polymerization, bulk polymerization, or slurry polymerization may be employed. The components may be copolymerized either continuously or batchwise.

Examples of a polymerization solvent used for copolymerization include aliphatic hydrocarbons such as hexane, heptane, octane, and kerosene; alicyclic hydrocarbons such as cyclohexane and methylcyclohexane; aromatic hydrocarbons such as benzene, toluene, and xylene; and the like. These solvents may be used either individually or in combination of two or more.

The copolymerization reaction temperature is -50 to +230°C, preferably -30 to +200°C, and more preferably -20 to +150°C. The copolymerization reaction time is 2 minutes to 5 hours, and preferably 5 minutes to 3 hours. The pressure during the polymerization reaction is more than 0 MPa and 10 MPa or less, and preferably more than 0 MPa and 5 MPa or less.

When carrying out the polymerization reaction, the metallocene compound (a), and the organoaluminum oxy compound (b) or the borate or borane compound (c) and the organoaluminum compound (d) as the catalyst may be separately added to the reactor, or may be caused to contact in advance outside the polymerization system.

The concentration of the metallocene compound (a) during the polymerization reaction is preferably 0.00005 to 1.0 mmol/1, and more preferably 0.0001 to 0.3 mmol/1. The concentration of the organoaluminum oxy compound (b) and the borate or borane compound (c) is preferably 1 to 10,000 equivalents based on the metallocene compound (a).

The concentration of the organoaluminum compound (d) used in combination is preferably 0.01 to 100 equivalents based on the boron atoms of the borate or borane compound.

In the production of the copolymer of the present invention, a copolymer with a desired composition can be obtained by appropriately changing the ratio of the norbornene monomer (A), the aromatic vinyl compound (B), and the α-olefin (C).

Specifically, the content of the norbomene monomer (A) is usually 1 to 80 mol%, and preferably 2 to 70 mol%, the content of the aromatic vinyl compound (B) is usually 10 to 90 mol%, and preferably 15 to 80 mol%, and the content of the α-olefin (C) is usually 1 to 80 mol%, and preferably 2 to 70 mol% based on the total monomers.

The ratio (molar ratio) of the norbomene monomer (A) and the aromatic vinyl compound (B) is preferably 8/1 to 1/90, more preferably 7/10 to 1/80, and particularly preferably 4/1 to 1/40.

In the synthesis of the copolymer of the present invention, the norbomene monomer (A), the aromatic vinyl compound (B), and the α-olefin (C) may be added using an arbitrary method. For example, the total amount of the components (A), (B), and (C) may be added to the reactor, and the catalyst components may be added thereafter. Or, the components (A), (B), and (C) may be added all together or stepwise in the presence of the catalyst components. Alternatively, after adding part or all of the components (A), (B), and (C) to the reactor, the catalyst components may be added, and the remaining monomers may be added all together or stepwise.

The molecular weight of the copolymer of the present invention may be adjusted by carrying out the polymerization reaction in the presence of hydrogen. The molecular weight of the copolymer may also be adjusted by changing the types and the amounts of the catalyst components (a), (b), (c), and (d), or changing the polymerization reaction temperature.

After completion of the polymerization reaction, the desired norbornene addition copolymer can be isolated by removing the catalyst and drying the product according to an ordinary method.

The norbomene addition copolymer of the present invention thus obtained may be used as various molding materials, as described later. In particular, since the norbomene addition copolymer of the present invention exhibits excellent transparency, a high refractive index, low hygroscopicity, and a small intrinsic birefringence value, the norbornene addition copolymer of the present invention may be suitably used as a molding material (optical material) for an optical molded article.

### 3) Molded article obtained by molding norbomene addition copolymer

A molded article of the present invention is obtained by molding the norbomene addition copolymer of the present invention. As the molding method, a known thermoplastic resin molding method may be employed. Specific examples of the molding method include injection molding, extrusion molding, blow molding, vacuum molding, rotational molding, press molding, roll molding, and the like.

When producing the molded article of the present invention, various additives may be added to the norbomene addition copolymer of the present invention. Examples of the additives include an antioxidant; a UV absorber; a weatherability stabilizer; an antistatic agent; a light stabilizer; a near-infrared absorber; a coloring agent such as a dye and a pigment; a lubricant; a plasticizer; an anti-blocking agent; a fluorescent whitening agent; a deodorant; a filler; a crosslinking agent; a vulcanizing agent; other synthetic resins and gum polymers; and the like.

Preferred specific examples of the molded article of the present invention include various optical molded articles such as substrates for optical recording media and magnetooptical recording media; lenses and prisms such as lenses for glasses, f·θ lenses, and pick up lenses; optical cards; optical fibers; optical mirrors; and liquid crystal display members such as liquid crystal display element substrates, light-guiding plates, polarizing films, and retardation films.

A film-shaped molded article of the present invention exhibits excellent adhesion to a polymer film with a negative intrinsic birefringence value (e.g. polystyrene resin) and a polymer film with a positive intrinsic birefringence value (e.g. norbornene resin). Therefore, when using the film-shaped molded article of the present invention for a laminate film, adhesion of the laminate film can be improved.

### EXAMPLES

The present invention is described below in more detail by way of examples and comparative examples. Note that the present invention is not limited to the following examples. In the examples and comparative examples, "part" and "%" respectively refer to "part by weight" and "wt%" unless otherwise indicated.

The properties of copolymers of the examples and the comparative examples were measured as follows.

### (1) Molecular weight

The number average molecular weight (Mn) and the weight average molecular weight (Mw) of the copolymer were measured by gel permeation chromatography (GPC) and determined as polystyrene-reduced values.
As the GPC eluent, tetrahydrofuran (THF) was used for a polymer soluble in THF, and chloroform was used for a polymer insoluble in THF.

### (2) Content of each repeating unit in copolymer

The content of each repeating unit in the copolymer was determined as follows by ¹H-NMR spectrum analysis and ¹³C-NMR spectrum analysis in a deuterated chloroform solvent.

### (Copolymers of Examples 1 and 2 and Comparative Example 1)

The ratio of tetracyclo[9.2.1.0^{2,10}.0^{3,8}]tetradeca-3,5,7,12-tetraene and styrene (mol/mol) was determined based on the integrated value of four carbon atoms of the aromatic ring of the styrene unit at 127.5 ppm and 128.1 ppm and the integrated value of one carbon atom of the aromatic ring of the styrene unit and four carbon atoms of the aromatic ring of the tetracyclo[9.2.1.0^{2,10}.0^{3,8}]tetradeca-3,5,7,12-tetraene unit at 123 to 127 ppm in the ¹³C-NMR spectrum.

The ratio of the ethylene unit in the signal based on the aliphatic at 0.4 to 4.0 ppm was determined by assigning the above ratio to the integrated value of the signal based on the aromatic ring at 6.7 to 7.6 ppm in ¹H-NMR to determine the ratio of tetracyclo[9.2.1.0^{2,10}.0^{3,8}]tetradeca-3,5,7,12-tetraene, styrene, and ethylene (mol/mol/mol).

### (Copolymers of Example 3 and Comparative Example 2)

The ratio of norbornene, styrene, and ethylene (mol/mol/mol) was determined based on the integrated value of one carbon atom of the aromatic ring derived from styrene at 125.5 ppm, the integrated value of one bridgehead carbon atom derived from norbornene at 34 to 32 ppm, and the integrated value of one carbon atom derived from ethylene at 31 to 28 ppm in the ¹³C-NMR spectrum.
The ratio of styrene and norbornene-ethylene (mol/mol) was determined based on the integrated value of the signal based on the aromatic ring at 6.7 to 7.6 ppm and the integrated value of the signal based on the aliphatic at 0.4 to 3.0 ppm in ¹H-NMR. The results were compared with the results of the ¹³C-NMR spectrum to determine the ratio of the content of each repeating unit.

### (3) Glass transition temperature

The glass transition temperature (Tg) of the polymer was measured by differential scanning calorimetry (DSC) at a temperature rise rate of 10°C/min.

### (4) Birefringence value

The polymer was press-molded at 200°C to form an optical disk substrate with a thickness of 1.2 mm and a diameter of 85 mm. The birefringence value at 546 nm was measured at a position of 25 mm from the center of the substrate using a polarization microscope (Senarmont compensator, manufactured by Nikon Corporation). The closer the birefringence value to zero, the lower the birefringent properties.

### (5) Refractive index

The refractive index of the disk substrate prepared in (4) was measured in accordance with ASTM D542 using an Abbe refractometer (DR-M2, manufactured by Atago Co., Ltd.).

### (6) Stress-optical coefficient (C_{R})

The stress-optical coefficient (C_{R}) was determined by a method described in Polymer Journal, Vol. 27, No. 9, pp. 943-950 (1995). Specifically, a sample with a thickness of 1 mm, a length of 20 mm, and a width of 10 mm was prepared by thermally pressing the polymer. Several types of specific load were applied to the sample at a temperature equal to or higher than the glass transition temperature (Tg). The sample was slowly cooled to room temperature in a state in which the sample was expanded by several percents, and the retardation was measured. The stress-optical coefficient (C_{R}) was calculated from the retardation and the applied stress.

### (7) Total light transmittance

The polymer was press-molded at 200°C to form a specimen with a thickness of 3 mm, a length of 130 mm, and a width of 120 mm. The total light transmittance of the specimen was measured in accordance with JIS K7105 using a haze meter ("NDH2000" manufactured by Nippon Denshoku Co., Ltd.).

### (8) Saturated water absorption

The saturated water absorption was measured using the specimen prepared in (7) in accordance with JIS K7209.

### (Example 1) Production of copolymer (A)

A pressure-resistant glass reactor equipped with a stirrer was charged with 865 parts of toluene, 200 parts of tetracyclo[9.2.1.0^{2,10}.0^{3,8}]tetradeca-3,5,7,12-tetraene, 273 parts of styrene, and 0.630 parts of triethylaluminum dissolved in 5.18 parts of toluene.
43.3 parts of toluene, 0.04 parts of rac-ethylenebis(1-indenyl)zirconium dichloride, and 0.499 parts of methylaluminoxane dissolved in 2.56 parts of toluene were mixed in another glass reactor. The mixture was then added to the above reactor. After introducing ethylene gas at 0.2 MPa, polymerization was initiated at 40°C. After 120 minutes of polymerization, the polymerization solution was poured into a large quantity of hydrochloric acid/methanol to completely precipitate the polymer. After separation by filtration and washing, the polymer was dried at 60°C for 15 hours under reduced pressure to obtain 65.2 parts of a copolymer (A).

The Mw and the Mn of the resulting copolymer (A) were respectively 93,100, and 47,100. The composition ratio of tetracyclo[9.2.1.0^{2,10}.0^{3,8}]tetradeca-3,5,7,12-tetraene/styrene/ethylene in the polymer was 21.8/13.1/65.1 (mol/mol/mol). The Tg of the copolymer (A) was 89°C.

The copolymer (A) was press-molded at 200°C to obtain an optical disk substrate (A). The optical disk substrate (A) had a total light transmittance of 90%, a saturated water absorption of 0.01% or less, a birefringence value of 8 nm, a refractive index of 1.58, and a C_{R} of 864×10⁻¹² Pa.

### (Example 2) Production of copolymer (B)

A polymerization reaction was carried out in the same manner as in Example 1 except for introducing ethylene gas at 0.05 MPa instead of ethylene gas at 0.2 MPa to obtain 61.0 parts of a copolymer (B).

The Mw and the Mn of the resulting copolymer (B) were respectively 63,900, and 30,600. The composition ratio of tetracyclo[9.2.1.0^{2,10}.0^{3,8}]tetradeca-3,5,7,12-tetraene/styrene/ethylene in the polymer was 24.8/17.9/58.1 (mol/mol/mol). The Tg of the copolymer (B) was 101°C.

The copolymer (B) was press-molded at 200°C to obtain an optical disk substrate (B). The optical disk substrate (B) had a total light transmittance of 96%, a saturated water absorption of 0.01 % or less, a birefringence value of 6 nm, a refractive index of 1.58, and a C_{R} of 550×10⁻¹² Pa.

### (Example 3) Production of copolymer (C)

A pressure-resistant glass reactor (1) equipped with a stirrer was charged with 173 parts of toluene, 75 parts of norbornene, 182 parts of styrene, and 3.86 parts of triisobutylaluminum. 0.06 parts of (t-butylamide)dimethyl-1-indenylsilanetitaniumdimethyl dissolved in 8.65 parts of toluene and 0.18 parts of trityltetrakispentafluorophenylborate dissolved in 8.65 parts of toluene were mixed in another glass reactor (2). The mixture was then added to the reactor (1). After introducing ethylene gas at 0.1 MPa into the reaction mixture in the reactor (1), polymerization was initiated at 60°C. After 60 minutes of polymerization, the polymerization solution was poured into a large quantity of hydrochloric acid/methanol. After separating the precipitate by filtration, the product was dried at 80°C for 15 hours under reduced pressure to obtain 46.2 parts of a copolymer (C).

The Mw and the Mn of the resulting copolymer (C) were respectively 248,900, and 107,100. The composition ratio of norbornene/styrene/ethylene in the polymer was 22.9/22.4/54.7 (mol/mol/mol). The Tg of the copolymer (C) was 82°C.

The copolymer (C) was press-molded at 200°C to obtain an optical disk substrate (C). The optical disk substrate (C) had a total light transmittance of 90%, a saturated water absorption of 0.01% or less, a birefringence value of 6 nm, a refractive index of 1.56, and a C_{R} of -503×10⁻¹² Pa.

### (Comparative Example 1) Production of copolymer (D)

A polymerization reaction was carried out in the same manner as in Example 1 except that styrene was not added and the reaction time was changed from 120 minutes to 30 minutes to obtain 158 parts of a copolymer (D).

The Mw and the Mn of the resulting copolymer (D) were respectively 123,000, and 51,000. The composition ratio of tetracyclo[9.2.1.0^{2,10}.0^{3,8}]tetradeca-3,5,7,12-tetraene/ethylene in the polymer was 31/69 (mol/mol). The Tg of the copolymer (D) was 125°C.

The copolymer (D) was press-molded at 200°C to obtain an optical disk substrate (D). The optical disk substrate (D) had a total light transmittance of 90%, a saturated water absorption of 0.01 % or less, a birefringence value of 18 nm, a refractive index of 1.57, and a C_{R} of 1670×10⁻¹² Pa.

### (Comparative Example 2) Production of copolymer (E)

A polymerization reaction was carried out in the same manner as in Example 1 except for using 200 parts of norbornene instead of 200 parts of tetracyclo[9.2.1.0^{2,10}.0^{3,8}]tetradeca-3,5,7,12-tetraene to obtain 24.0 parts of a copolymer (E).

The Mw and the Mn of the resulting copolymer (E) were respectively 68,300, and 32,100. The composition ratio of norbornene/styrene/ethylene in the polymer was 35.8/6.8/57.4 (mol/mol/mol). The Tg of the copolymer (E) was 83°C.

The copolymer (E) was press-molded at 200°C to obtain an optical disk substrate (E). The optical disk substrate (E) had a total light transmittance of 96%, a saturated water absorption of 0.01% or less, a birefringence value of 6 nm, a refractive index of 1.54, and a C_{R} of 605×10⁻¹² Pa.

As is clear from the above results, it was confirmed that the copolymers (A) to (C) obtained in Examples 1 to 3 exhibited excellent transparency, a high refractive index, low hygroscopicity, a small C_{R} value, and a small birefringence value. Although the copolymer (D) obtained in Comparative Example 1 had a high refractive index of 1.57, the copolymer (D) exhibited a large C_{R} value of 670×10⁻¹² Pa and a large birefringence value of 18 nm. Although the copolymer (E) obtained in Comparative Example 2 had a small C_{R} value of 605×10⁻¹² Pa and a small birefringence value of 6 nm, the copolymer (E) had a low refractive index of 1.54.

### INDUSTRIAL APPLICABILITY

The norbomene addition copolymer and the molded article of the present invention exhibit excellent transparency, a high refractive index, and a small intrinsic birefringence value.
The molded article of the present invention may be suitably used as an optical disk, an optical lens, an optical card, an optical fiber, an optical mirror, a liquid crystal display element substrate, a light-guiding plate, a polarizing film, a retardation film, and the like.

## Claims

1. A norbornene addition copolymer obtained by subjecting a norbomene monomer (A), an aromatic vinyl compound (B), and an α-olefin having 2 to 20 carbon atoms (C) to addition copolymerization, the sum of the content of repeating units derived from the norbornene monomer (A) and the content of repeating units derived from the aromatic vinyl compound (B) being 25 to 90 mol% based on the total repeating units, and the content of repeating units derived from the aromatic vinyl compound (B) being 0.55 to 10 (mol) times the content of repeating units derived from the norbomene monomer (A).

2. The norbomene addition copolymer according to claim 1, wherein the norbornene monomer (A) has an aromatic ring as a substituent.

3. The norbomene addition copolymer according to claim 1, having a negative stress-optical coefficient (C_{R}).

4. A molded article obtained by molding the norbomene addition copolymer according to any one of claims 1 to 3.

5. The molded article according to claim 4, which is used for optics.
